# EUROPEAN PATENT SPECIFICATION

(11) **EP 1 837 315 B1**
(45) Date of publication and mention of the grant of the patent: **22.02.2012**
(21) Application number: 05813157.4
(22) Date of filing: 07.12.2005
(51) Int. Cl.: C04B 11/028, F26B 9/06

(54) **PLANT FOR HYDROTHERMALLY TREATING AND DRYING PLASTER STONE**
VORRICHTUNG ZUR HYDROTHERMALEN BEHANDLUNG UND TROCKNUNG VON ROHGIPS
DISPOSITIF DE TRAITEMENT HYDROTHERMIQUE ET DE SECHAGE DE PIERRE A PLATRE

(30) Priority: 09.12.2004 LV 040143
(43) Date of publication of application: 26.09.2007
(73) Proprietor: Cimermanis, Lazars-Harijs, Riga 1013 (LV)
(72) Inventor: Cimermanis, Lazars-Harijs, Riga 1013 (LV)
(74) Representative: Anohins, Vladimirs
(86) International application number: PCT/LV2005/000013
(87) International publication number: WO 2006/062383

(56) References cited:
- EP-A1- 0 041 309
- SU-A- 568 817
- SU-A- 724 897

## Description

The present invention relates to the industry of construction materials and binding substances and is intended for manufacturing high strength alpha-hemihydrate and alpha-anhydrite gypsum binders; in addition it can be used for manufacturing aerated concrete and drying products made of faience and porcelain, wood and other materials.

The equipment for hydrothermal processing and dehumidification (drying) of gypsum rock for manufacturing high strength gypsum binders is known in the industry. For example, in [1] an integrated plant is disclosed, which includes a horizontal cylindrical air-tight autoclave working chamber equipped with a system of hot heat carrier feeding and a distribution manifold, a receiver with a vacuum pump, and quick-action gate valves. The plant is equipped with thermal shields and infrared radiation generators, which are mounted on the inside of the working chamber wall. The heat carrier feeding system is made as a linear pipeline with affixed tubular type segments that have perforation and nozzle bell-mouths. The thermal shields and heat carrier feeding system are located in the upper section of the chamber and can heat up not more than 2/3 of the upper part of the gypsum rock pile to be dehumidified.

The said equipment of the prior art has a drawback of non-uniform dehumidification of gypsum rock throughout the height of the rock pile above the autoclave trolley, which results in dry overheating and accelerated drying of the pile upper layers and slower drying of lower layers. It leads to formation of some amount of beta-hemihydrate and beta-anhydrite in the upper layers and re-hydration of calcium sulfate hemihydrate in two-hydrate in the lower layers. As a result quality of the high-strength gypsum binder is decreased due to availability of the said impurities in the main product, i.e. calcium sulfate alpha-hemihydrate.

There is also known a chamber-type device for drying gypsum rock after its hydrothermal treatment in another autoclave unit [2]. The device includes a horizontal chamber with distributing and collecting manifolds arranged symmetrically relative the chamber vertical axis and divided in two compartments. A circulation circuit of the device is provided with a switch dividing the circuit in two branches lengthwise the chamber. Water-steam heating devices are arranged inside the distributing and collecting manifolds.

The drawback of this prior art device is non-uniform drying along the chamber. The materials located closer to the gas distributing manifolds are getting dehumidified faster. The device does not have a receiver with a vacuum pump, therefore gypsum rock drying takes longer time in comparison with the drying process in the plant according to invention [1].

Arrangement of the heating devices inside the working chamber is a common drawback of the prior art. Since gypsum rock hydrothermal treatment and drying produce aggressive acid medium resulting in accelerated corrosion of the heating devices, positioning of the heaters inside the working chamber leads to their premature failure and necessitates replacement, which in turn leads to a considerable number of interruptions in the equipment operation.

Also a chamber-type plant is known [3] for drying capillary-porous materials, for example, building products. It contains a horizontal airtight cylinder connected to the systems of heat carrier feeding and withdrawal and to the vacuum pumping system, gas feeding and gas removal manifolds, vertical partitions with nozzles, which are mounted at an angle of 30-45° and directed in one partition upward and in another one downward.

Water vapour supply into this plant is not foreseen, therefore it is not applicable for the hydrothermal treatment of natural gypsum rock.

In [4] a plant is described for drying ceramic, heat-insulating and gypsum products made of other gypsum binding substances (after the product moulding and binder hydration). The plant contains a horizontal working chamber with a system of feeding hot heat carrier, a vacuum receiver and gas-distribution manifolds. It also comprises drying autoclave trolleys for the treated products. The gas feeding and offtake manifolds of the plant are divided into sections to form 3-5 drying zones, the section length is 2/3 of the zone length and each section comprises 3-5 channels. The autoclave trolleys with the products to be dried are loaded into the plant periodically after the previous batch of the products has been treated in the plant sections with different temperature conditions and speeds of blowing by heat carrier.

The plant is not applicable for hydrothermal treatment and drying of gypsum rock, because airtight sealing of the working chamber during the whole period of the treatment is necessary for the hydrothermal treatment of gypsum rock. Water vapour supply is not foreseen here as In the plant [3]. Nor this plant is applicable for drying gypsum rock, which has passed hydrothermal treatment in a separate autoclave, because the last autoclave trolley with the products arrives into the chamber only after the first autoclave trolley leaves the drying plant after travelling along the drying sections. If the gypsum rock drying process is not carried out immediately after hydrothermal treatment, then it is cooled down and separated crystallization water is rehydrated with formation of secondary dihydrate gypsum and subsequent generation of hemihydrate and anhydrite alpha-shaped gypsum binders.

In [5] a plant is described for a binder preparing for products moulding and drying the ready-made moulded products. It comprises tandem working chambers with the systems of hot heat carrier feeding and gas and vapour extraction. Hydrothermal treatment and drying of gypsum rock in this plant is not possible.

Gypsum rock treatment for manufacturing alpha-hemihydrate and alpha-anhydrite gypsum binders consists of two operations: hydrothermal treatment and drying, which are described more in detail in the example of the offered invention embodiment. The prior art devices [3] and [4] are the plants, which are designed only for drying capillary-porous materials and not intended for hydrothermal treatment of materials by water vapour. The plant described in [5] is designed only for the binder preparing for products moulding and drying the ready-made moulded products. Hydrothermal treatment and drying of gypsum rock in this plant is not possible.

It is purposeful to treat gypsum rock in a single unit to eliminate reloading of the material into the drying device after its hydrothermal treatment in the autoclave, thus avoiding the rock cooling. Therefore the known technical solution [1] of gypsum rock hydrothermal treatment and drying in a single plant is selected as a prototype of the offered invention.

It is an object of the present invention to increase reliability of the plant operation and uniformity of drying all products (separate gypsum rock pieces) throughout both the height and length of the plant working chamber.

The said object is accomplished by the plant embodiment.

The offered gypsum rock hydrothermal treatment and drying plant consists of a cylindrical working autoclave chamber with a system of hot heat carrier feeding, a vacuum receiver, connected with the working chamber and vacuum pump, gas distribution manifolds, quick-action vacuum-forcing shutters, autoclave trolleys with the material to be treated. The plant is also equipped with even number of autoclave trolleys and the same number of segment type gas distribution sections, arranged symmetrically relative the working chamber vertical axis and separated from each other with a vertical partition in such a way, that the section length is equal to the autoclave trolley length, but vertical rectangular walls, separating the gas distribution sections from the working chamber operating space, are perforated with increase of gas windows open flow areas or windows number top-down throughout the wall height, e.g according to Bolzmann barometric formula. The gas distribution pipes at their midpoints are connected to branch pipes with quick-action vacuum-forcing shutters and the said branch pipes are connected to main gas tubes, which are symmetrical relative the working chamber horizontal axis and connected symmetrically to a gas flow directing circuit while the latter is connected to a gas preparation device.

The gas flow directing circuit is made as a closed gas pipe consisting of two symmetrical branches, whose midpoints are connected to gas pipes, which connect one of the branches to a forced-draft fan and another branch to an exhaust fan. Two adjustable gas shutters are Installed symmetrically in each point of the said gas pipes connection to the said branches.

The main gas tubes are connected to the gas flow directing circuit symmetrically relative the working chamber vertical axis to connect the circuit to the gas distribution pipes of the plant.

The gas preparation device of the plant is made as a closed circuit, at whose input a calorifer gas generation chamber is connected to the exhaust fan and to an air-intake pipe. Both connections of the gas generation chamber are provided with adjustable shutters. The exhaust fan pipe is also connected to a steam condenser through a pipe with an adjustable shutter. A pipe of gas outlet from the condenser is connected to both outside environment and the calorifer air-intake pipe, while the calorifer is connected to the forced-draft fan.

The plant working chamber is equipped with the heat carrier sensors of temperature, moisture and movement speed, the treated material sensors of temperature and humidification potential, monitors of the loaded trolley weight change. The plant may be equipped with a system of automatic monitoring the severs indicated values, a program of the indicated values matching to the process setpoints and automatic correction of adjustment signals, a system of passing these signals to the actuation mechanisms, which control operation of all shutters, fans and the vacuum pump.

The offered embodiment of the gypsum rock hydrothermal treatment and drying plant also maintains constant temperature and flow speed of the heat carrier both throughout the length and height of the working chamber, periodically changing the heat carrier flow direction relative the treated gypsum rock, as well as gradually changing the heat carrier moisture content by mixing the outgoing heat carrier with the heated dry one in the heat carrier preparation device. It provides alteration of the heat carrier parameters in the process of drying according to the moisture conditions of the gypsum rock to be dehumidified. Combination of the heat carrier parameters variation with the blowing direction changing and periodic pulsed vacuum pumping provides outflow of water, which segregates in liquid phase from two-hydrous calcium sulphate in the process of its dehydrating, to the gypsum rock surface and its removal with the outgoing heat carrier. It provides uniform drying of the material and formation of homogeneous alpha-modification calcium sulphate crystals throughout the whole cross-section of the treated gypsum rock. The capability of the drying process adjustment with transfer of the liquid phase moisture to the rock surface prevents formation of beta-form calcium sulphate crystals in the gypsum rock surface layers. The possibility of secondary calcium sulphate dihydrate formation is also prevented. It leads to increasing quality of the produced high-strength gypsum binders.
Fig. 1 shows the plant general layout.
Fig. 2 shows the working chamber cross-section along 2-2 plane.
Fig. 3 shows the receiver cross-section along 4-4 plane.

The gypsum rock hydrothermal treatment and drying plant contains the horizontal cylindrical working chamber (autoclave) 1, even number of the autoclave trolleys 2 with the material (products) to be treated, even number of the identical segment type gas distribution sections 3, arranged symmetrically relative the working chamber vertical axis and divided from each other with impenetrable vertical partitions 4 and from the chamber working space with the vertical perforated walls 5. The walls 5 are provided with round, rectangular or other form gas windows at equal distance from each other throughout the height of the wall 5, while open flow areas of the gas windows are increasing top-down, e.g. according to Bolzmann barometric formula.

The impenetrable dividing partitions 4 between the sections 3 are located in the plane of the autoclave trolleys 2 interfacing. The gas feeding pipes 6 contain adjustable gas shutters 7 and are connected to each gas distribution section 3. The said pipes 6 are also connected to gas distribution pipes 8, which are symmetrical relative the autoclave vertical axis. Two adjustable gas shutters 9 are installed in each gas distribution pipe 8 symmetrically relative the working chamber transverse vertical axis X-X, which divides the chamber in two equal zones A and B. Gas branch pipes 10 are connected to both symmetrical gas distribution pipes. The quick-action vacuum-forced shutters11 are installed in the branch pipes 10.

A vacuum line 12 is provided with a quick-action vacuum-forcing shutter 13 and connected to the working chamber 1. A steam-pipe 14 with a vacuum-forced shutter 15 is mounted in the chamber 1. A condensate export pipe 16 with a vacuum-forced shutter is connected to the working chamber.

Thus the plant embodiment at closed vacuum-forcing shutters 11, 13, 15, 17 and gate valves 18 represents a closed air-tight vacuum-forcing gas distribution circuit (a, b, c, d).

The second gas flow directing circuit of the plant (e f g h) is made as a closed gas pipe, consisting of two branches 19. Gas pipes 20 are connected to the midpoint of each branch and connect one of the branches to an exhaust fan 21 and another branch to a forced-draft fan 22. Gas shutters 23 (total 4 shutters) are mounted in each branch 19 symmetrically relative the point of connection to the pipes 20. The gas flow directing circuit is connected to the branch pipes 10 of the closed gas distribution circuit (a, b, c, d) with main gas tubes 24 symmetrically relative the working chamber vertical axis.

The exhaust fan 21 and forced-draft fan 22 are connected to the gas preparation device which is the third closed circuit of the plant (I, k, I, m).

The gas preparation device includes a steam calorifer 25 and condenser 26. A gas generation chamber of the steam calorifer is connected at the input both to the exhaust fan 21 through a pipe 27, which has a gas shutter 28, and to the air-intake pipe 29 with an adjustable shutter (which is not shown on the drawing). The gas generation chamber is connected to the forced-draft fan 22 through a pipe 30. At the input the condenser 26 is connected by means of a gas feeding pipe 31 with a shutter 32 to a pipe 27, which connects the exhaust fan 21 to the steam calorifer 25. At the output the condenser 26 is connected to a gas outlet 33, which is connected to the air-intake pipe 29 through a pipe 34.

After the point of the pipe 34 connection to the gas outlet pipe 33 a gas shutter 35 is installed, and after the point of connection of the pipe 34 to the air-intake pipe 29 a gas shutter 36 is installed. A steam pipe 37 with an adjustable shutter 38 is connected to heating elements of the steam calorifer. The condenser 26 is connected to a condensate export pipe 39 which has an adjustable shutter 40. All the condensate export pipes of the plant are connected to the condensate collection main tube, which may be connected to a water-intake pipe of a steam-boiler.

The plant also contains a receiver 41, whose volume is twice or more bigger than a free space of the working chamber fully loaded with the material. The receiver is connected to the working chamber with the vacuum line 12. A vacuum pump 42 is connected to the receiver 41 through a vacuum line 43 with the quick-action shutter 44. A condensate export pipe 45 with a gate valve 46 is connected to the receiver 41.

The autoclave working chamber 1 is furnished with the trolleys 2, which are loaded with special cassettes, containing natural gypsum rock dihydrate in the form of separate pieces measuring 60 - 80 mm. The gate valves 18 and shutters 11, 15, 17 are closed. Subatmospheric pressure 600 - 650 torr is provided in the receiver. The shutter 13 is opened and subatmospheric pressure is created in the autoclave working chamber. The shutter 13 is closed and the shutter 15 is opened, thus allowing the steam flow from the steam-boiler along the steam-pipe 14 in the working chamber. The steam pressure in the working chamber is regulated with the shutter 15 according to the set temperature condition of separating fixed water from two-hydrous calcium sulphate to form calcium sulphate hemihydrate according to dehydrating chemical reaction

CaSO₄ · 2 H₂O - CaSO₄ · 0.5 H₂O + 1,5 H₂O.

After the set period of dehydrating the shutter 15 Is closed, the working chamber pressure is increased to atmospheric level by throttling steam through the gate valves 11 into the calorifer 26 and the condenser 26, then removal of the physically bound water from the gypsum rock is started. Thereafter the shutters 11 are opened, the shutters 9, 28 are opened at closed shutters 32 and 36, the shutter 38 is opened and the fans 21 and 22 are switched on.

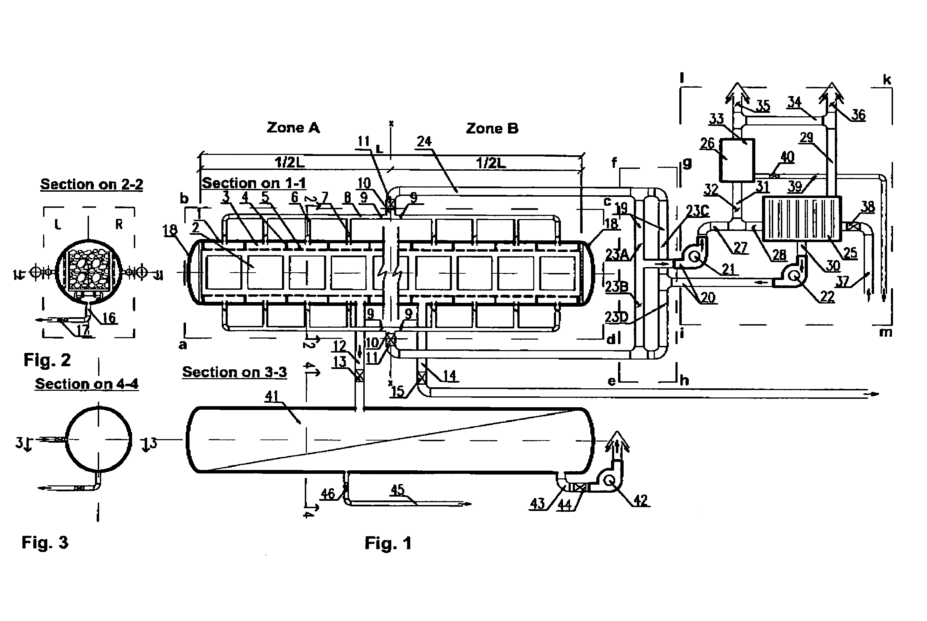

At the said positions of the shutters the fan 21 takes out the water steam from the working chamber left part L (Fig. 2), the steam arrives to the calorifer 25 and the fan 22 drives it in the working chamber right part R (Fig. 2). Uniform takeout of the heat carrier from the gas distribution sections 3 of the working chamber left part L and its uniform feeding into the gas distribution sections 3 of the working chamber right part R are regulated with shutters 6. The heat carrier flows in the direction R → L are created. The heat carrier flows in the direction L → R are created by reversing positions of the shutters 23₁, 23₂, 23₄.

When the water steam, accumulated in the working chamber, has flown through the calorifer during the set period, the heat carrier drying is started by regulation of the shutters 32, 35, 36. The heat carrier moisture and temperature are maintained according to the process setpoints.

R → L and L → R the heat carrier transversal flow directions are alternated with the set frequency.

In the set time periods transversal flows of the heat carrier are changed into diagonal ones in the direction from zone AL to zone BR (AL → BR). This is done by closing the shutters 9₂ and 9₃. By changing positions of the shutters 9₁, 9₂, 9₃ and 9₄ the heat carrier flow is reversed to the direction from zone BR to zone AL (BR → AL).

In the set time periods or by the signal of the control equipment the shutters 11 are closed and thus the heat carrier flow is let through the circuit (e, f, g, i).

The shutter 13 is opened and subatmospheric pressure of the set level is created in the autoclave working chamber. In the set time period the shutter13 is closed, the shutters 11 are opened and all the above mentioned actions are repeated until all the physically bound water is fully extracted from the gypsum rock. The condensate is periodically drained from the working chamber 1, the condenser 26 and the receiver 41 through the shutters 17, 40 and 46 accordingly.

In the process of gypsum rock dehumidification, steam throttling through the shutter 15 makes it possible to carry out three steps of 0.5 H₂O separation from calcium sulphate dihydrate, generating seeds of short-columnar and prismatic crystals alpha-CaSO₄ ·0.5H₂O, whose formation is finalized during the gypsum rock drying.

The uniform moisture removal from the surfaces of all treated gypsum rock pieces is provided by correspondence of the gas distribution sections to the number of the material loaded trolleys, distribution of the vertical walls perforation of the sections with increasing open flow areas top-down, the possibility of gradual drying of the heat carrier according to the set operation conditions or by the signals of the control equipment in the circuit (I, I, k, m), regulation of the heat carrier feeding to each gas distribution section with the individual adjustable shutter, alteration of R → L and L → R, AL → BR and BR → AL directions of the heat carrier flow.

Applying vacuum pumping pulse periodically provides movement of the liquid phase moisture from the inside layers of the humidified product to its surface. It preconditions successful accomplishment of forming short-columnar and prismatic CaSO₄ · 0.5 H₂O crystals, which is the basic factor of increasing the ready-made product quality.

The heat carrier preparation device is a closed circuit and allows utilization of the heat energy, removed from the working chamber with the outgoing heat carrier, and elimination of the steam emission to atmosphere together with the outgoing heat carrier. Thus the drained condensate is utilized with a certain practicality.

When calcium sulphate alpha-anhydrite is produced, first calcium sulphate alpha-hemihydrate is generated in the plant according to the above described procedure. Then the heat carrier temperature is increased to the set temperature of separating 0.5H₂O according to the dehydrating reaction

α- CaSO₄ · 0.5 H₂O → α - CaSO₄ + 0,5 H₂O

and the heat carrier flow direction is reversed periodically. If necessary, pulsed vacuum pumping of the working chamber is provided.

The plant may be also used in the production of products of autoclave aerated concrete for their drying and for drying or pressure impregnation of timber. Without steam pressure feeding the plant is useful for drying various products and materials: building ceramics, faience article, timber and other products. The plant does not produce harmful emissions into the environment.

### CITED DOCUMENTS

1. USSR certificate of authorship 588894, Int. CI. C04B 41/30, F26B 9/06, 1977 (prototype).
2. USSR certificate of authorship 1137288, Int CI. F26B 9/06, F26B 21/04, 1984.
3. USSR Certificate of authorship Nº 568817, IPC F26 B 9/08. 1977.
4. USSR Certificate of authorship Nº 724897, IPC F26 B 9/06, 1980.
5. Application EP 0041309 A1, IPC C04 B 11/02. F26 B 23/02, F02 C 6/18.1981.

## Claims

1. A gypsum rock hydrothermal treatment and drying plant, consisting of a cylindrical working autoclave chamber (1) with a system of hot heat carrier feeding, a vacuum receiver (41), connected with the working chamber (1) and a vacuum pump (42), gas distribution manifolds, quick-action vacuum-forcing shutters, autoclave trolleys (2) with the material to be treated, **characterized in that** the said plant is equipped with even number of the autoclave trolleys with the material to be treated and the same number of segment type gas distribution sections (3), arranged symmetrically relative the working chamber vertical axis and separated from each other with an impenetrable vertical partition (4) in such a way that the section length is equal to the autoclave trolley length and vertical rectangular walls (5) between the gas distribution sections (3) and the working chamber (1) working space are perforated with increasing open flow areas of gas windows or the number of gas windows throughout the wall height top-down, e.g. according to Bolzmann barometric formula, while each gas distribution section (3) is connected to a gas feeding pipe (6) with an adjustable gas shutter (7) and al gas feeding pipes (6) are connected to gas distribution pipes (8), while each of the said distribution pipes (8) is provided with two adjustable gas shutters (9), which are arranged symmetrically relative the working chamber transverse vertical axis, dividing the chamber (1) in two equal zones, the gas distribution midpoints are connected to branch pipes (10) with quick-action vacuum-forcing shutters (11), and the connection branch pipes (10) are connected to main gas tubes (24), which are arranged symmetrically relative the working chamber horizontal axis and connected symmetrically to a gas directing circuit, communicating with a gas preparation device.

2. A plant in accordance with claim 1, **characterized in that** its gas flow directing circuit is made as a closed gas pipe (19), consisting of two symmetrical branches, to whose midpoints gas pipes (20) are connected to communicate one of the branches with a forced-draft fan (22) and another with an exhaust fan (21), two adjustable gas shutters (23) are mounted in each branch symmetrically relative the points of connection to the said gas pipes (20), and the main gas tubes (24) are connected to the gas distribution circuit symmetrically to the working chamber vertical axis, connecting the gas distribution circuit to the gas distribution pipes (8) of the plant.

3. A plant in accordance with claim 1 or 2, **characterized in that** the gas preparation device is made as a closed circuit, at whose input a gas generation chamber of a calorifer (25) is connected through pipes (27) with adjustable shutters (28) to an exhaust fan (21) and air-intake pipe (29), while the pipe (27) from the exhaust fan (21) is also connected to a steam condenser (27) through a pipe (31) with an adjustable shutter (35) and a pipe of gas outlet from the condenser is connected to both outside environment and the calorifer (25) air-intake pipe (29) and the calorifer is connected to a forced-draft fan (22),

4. A plant in accordance with one of claims 1 - 3, **characterized in that** the said working chamber (1) is equipped with the heat carrier sensors of temperature, moisture and movement speed, the treated material sensors of temperature and humidification potential, monitors of the loaded trolley weight change.

5. A plant in accordance with claim 4, **characterized in that** it is equipped with a system of automatic monitoring the sensors indicated values, a program of the indicated values matching to the process setpoints and automatic correction of adjustment signals, a system capable of passing these signals to the actuation mechanisms, which are capable of controlling the operation of all shutters, fans and the vacuum pump.

## Patentansprüche

1. Anlage für hydrothermale Behandlung und Trocknung des Gipssteins, welche horizontale zylindrische Arbeitskammer - Autoklav (1) mit dem Zufuhrsystem des heißen Wärmeträgers, das Vakuumreceiver : (41), verbindet mit der Arbeitskammer (1) und der Vakuumpumpe (42) die Gasverteilungssammler, schnellwirkende Druckvakuumschieber, die Autoklavwagen (2) mit dem behandelten Werkstoff beinhaltet, **dadurch gekennzeichnet, dass** sie geradzahlige Anzahl von den Autoklavwagen (2) mit dem behandelten Werkstoff und dasselbe Anzahl von im Verhältnis zur senkrechten Achse der Arbeitskammer symmetrischen segmentartigen Gasverteilersektionen (3) aufweist, welche voneinander durch undurchlässige senkrechte Trennwand (4) auf solche Weise abgetrennt sind, daß Sektionslänge der Autoklavwagenlänge gleich ist, und senkrechte rechtwinklige Wände (5), die Gasverteilersektionen (3) von dem Fördervolumen der Arbeitskammer trennen, haben Perforation mit der Vergrößerung des Durchgangsquerschnitts der Gasöffnungen oder seinen Anzahl nach der Wandhöhe von oben nach unten, beispielweise nach der barometrischen Boltzmannformel, und dabei jede Gasverteilersektion (3) zu dem Gaszuführungsrohr (6) mit der regelbaren Gasklappe (7) angeschlossen wurde, und alle Gaszuführungsröhre (6) zu den im Verhältnis zur senkrechten Achse der Arbeitskammer symmetrischen Gasverteilungsröhren (8) angeschlossen wurden, dabei in jede Gasverteilungsrohr je zwei regelbare Gasklappen (9), symmetrisch im Verhältnis zu senkrechten Ebene, welche die Arbeitskammer (1) nach der Länge in zwei gleiche Bereiche teilt, eingebaut wurden, und Gasverteilungsröhren (8) in der Mitte seiner Länge zu den Stutzen (10) mit den schnellwirkenden Druckvakuumschieber (11) angeschlossen wurden, aber Verbindungsstutzen (10) zu den im Verhältnis zur horizontalen Achse der Arbeitskammer symmetrischen Hauptleitungsgasröhren (24) angeschlossen wurden, welche symmetrisch zu dem gasleitenden Kreislauf angeschlossen wurden, der seinerseits zur Gasaufbereitungseinrichtung angeschlossen wird.

2. Anlage nach dem Anspruch 1, **dadurch gekennzeichnet, dass** seiner gasleitender Kreislauf als geschlossenes Gasrohr (19), bestehend aus zwei symmetrischen Strangen, ausgeführt wird, wobei mitten auf dem jeden Strang Gasröhren (20) angeschlossen wurden, welche einen von beiden Strängen mit dem Drucklüfter (22), anderen - mit dem Absauglüfter (21) verbinden, und symmetrisch zur Anschlußstelle von diesen Gasröhren (20) nach jeden Strang je zwei regelbare Gasklappen (23) eingebaut wurden, und symmetrisch im Verhältnis zu senkrechten Achse der Arbeitskammer zum gasleitenden Kreislauf Hauptleitungsgasröhren (24) angeschlossen wurden, welche diesen Kreislauf mit den Gasverteilungsröhren (8) der Anlage verbinden.

3. Anlage nach dem Anspruch 1 oder 2, **dadurch gekennzeichnet, dass** Gasaufbereitungseinrichtung als geschlossener Kreislauf ausgebildet wird, wo die Gasentwicklungskammer des Heizapparates (25) auf dem Eingang zum Absauglüfter (21) mittels des Rohres (27) mit den regelbaren Klappen (28) und zum Außenluftentnahmerohr (29) angeschlossen wurde, wobei das Rohr (27) von dem Absauglüfter (21) auch zum Dampfkondensator (27) mittels des Rohres (31) mit der regelbaren Klappe (35) angeschlossen wurde, und Gas vom Kondensator ableitendes Rohr durch regelbare Gasklappe (35) steht in Verbindung mit der Außenluft und obendrein mit dem Außenluftentnahmerohr (29) des Heizapparates (25), welcher zum Gasdrucklüfter (22) angeschlossen wird, sich verbindet.

4. Die Anlage nach einem von Ansprüchen 1 - 3, **dadurch gekennzeichnet, dass** die Arbeitskammer (1) mit den Gebern der Temperatur, Feuchtigkeit und Bewegungsgeschwindigkeit des Wärmeträgers, auch mit den Gebern der Temperatur und des Wasseraufnahmepotentials des bearbeiteten Stoffs und mit Gebern der Kontrolle über Massenveränderung des Wagens mit dem bearbeiteten Stoff ausgerüstet wurde.

5. Die Anlage nach dem Anspruch 4, **dadurch gekennzeichnet, dass** sie mit dem automatischen Kontrollsystem über Geberanzeigen, mit dem Programm des Vergleichs von diesen Anzeigen mit den Sollbetriebsparameter des Fertigungsprozesses und auch automatischer Korrektur der Regelungssignalen ausgerüstet ist, also mit dem System, welche fähig ist diese Signale zu Ausführungsvorrichtungen zu übertragen, welche fähig sind die Arbeit von allen Klappen und Schiebern des Aggregates, seinen Lüftern und auch der Vakuumpumpe zu regeln.

## Revendications

1. Dispositif de traitement hydrothermique et de séchage de pierre à plâtre, comprenant une cuve à pression (1) horizontale cylindrique de travail avec un circuit d'amenée d'un agent caloporteur chaud, un réservoir d'air en dépression (41), couplé à la cuve à pression de travail (1) et à une pompe à vide (42), des collecteurs de distributions de gaz, des fermetures vides en charge rapides, des wagonnets autoclaves (2) avec le matériel travaillé, et avec cela il comprend un nombre pair des wagonnets autoclaves (2) avec le matériel travaillé et le même nombre des sections segmentales de distributions de gaz (3) symétriques par rapport à l'axe vertical de la cuve à pression de travail, distancées par une cloison étanche verticale (4) ainsi que la longueur de la section est l'égal en la longueur du wagonnet autoclave, puis des murailles verticale rectangulaires (5), séparant les sections de distributions de gaz (3) du volume utile de la cuve à pression de travail (1), ont une perforation à agrandissement de la section de passage des fenêtres de gaz ou les leurs nombres en hauteur de la muraille de haut en bas, par exemple d'après la formule barométrique de Boltzmann, puis chaque section de distribution de gaz (3) est couplée à une pipe d'évacuation des gaz (6) à l'obturateur réglable à gaz (7) et toutes les pipes d'évacuations des gaz (6) sont couplées aux pipes de distributions de gaz (8) symétriques par rapport à l'axe vertical de la cuve à pression de travail, dans chaque de lesquelles on a incorporé deux obturateurs réglables à gaz (9) symétriques par rapport au plan vertical, séparant la cuve à pression de travail (1) à longueur sur deux zone égale, et les pipes de distributions de gaz (8) sont au milieu de sa longueur couplées aux tubulures de connexion (10) avec des fermetures vides en charge rapides (11), puis les tubulures de connexion (10) sont couplés aux tubes magistraux de gaz (24) symétriques par rapport à l'axe horizontal de la cuve à pression de travail, couplés symétriquement au circuit directeur de gaz qui est couplé au aménagement préparatoire de gaz.

2. Dispositif selon la revendication 1, **caractérisé en ce que** son circuit directeur de gaz est exécuté sous forme de la pipe de gaz fermée (19), consisté en deux branches symétriques, au milieu de chaque des quelles on a couplé les pipes de gaz (20), connectées une branche avec un ventilateur en charge (22 , et l'autre - avec un exhausteur (21), et symétriquement au point de l'adjonction de ces pipes de gaz (20) dans chaque des axes verticaux de la cuve à pression de travail les tubes magistraux de gaz (24) sont connectés au circuit directeur de gaz, couplant le circuit directeur de gaz aux pipes de distributions de gaz (8) du dispositif.

3. Dispositif selon la revendication 1 ou la revendication 2, **caractérisé en ce que** l'aménagement préparatoire de gaz est exécuté sous forme du circuit fermé auquel le foyer-gazogène de l'aérochauffeur (25) à l'entrée est connecté à l'exhausteur (21) par la voie de la pipe (27) et la pipe de prise d'air (29) avec l'obturateur réglable à gaz (36), et en outre la pipe (27) de l'exhausteur (21) est aussi connecté au condenseur de vapeur (26) par la voie de la pipe (31) avec l'obturateur réglable (35), et la conduite de départ du gaz du condenseur est liée avec l'atmosphère par l'obturateur réglable de gaz (35) et elle est encore couplée à la pipe de prise d'air (29) de l'aérochauffeur (25), qu'il est connecté au ventilateur en charge de gaz (22).

4. Dispositif selon une des revendications 1-3 **caractérisé en ce que** la cuve à pression de travail (1) est équipée des thermostats de commande, du capteur d'humidité et du détecteur de vitesse de marche de l'agent caloporteur, des thermostats de commande et du capteur du potentiel d'humidification du matériel travaillé, et le senseur de contrôle de la variation de poids du wagonnet avec le matériel travaillé.

5. Dispositif selon la revendication 4 **caractérisé en ce qu'**il est équipé du système de contrôle automatique des lectures, du programme de la comparaison leurs indications avec les paramètres fixés préétablis de régime du procédé technologique et de la correction automatique des signaux du réglage, de l'appareillage susceptible d'émettre ces signaux aux mécanismes d'action, susceptibles de commander le fonctionnement de tous les obturateurs et tous les fermetures de l'agrégat, ses ventilateurs et la pompe à vide.
